# NEUE EUROPÄISCHE PATENTSCHRIFT

(11) **EP 1 021 997 B2**
(45) Veröffentlichungstag und Bekanntmachung des Hinweises auf die Entscheidung über den Einspruch: **01.07.2020**
(45) Hinweis auf die Patenterteilung: 09.05.2007
(21) Anmeldenummer: 99125490.5
(22) Anmeldetag: 21.12.1999
(51) Int. Cl.: A61C 13/00, A61C 1/00

(54) **Verfahren zur Herstellung von Zahnersatz und dentalen Hilfsteilen**
Method of manufacture of dental prostheses and auxiliary elements
Procédé de manufacture de prothèses dentaires et d'accessoires orthodontiques

(30) Priorität: 19.01.1999 DE 19901643
(43) Veröffentlichungstag der Anmeldung: 26.07.2000
(60) Teilanmeldung: 07009207.7
(73) Patentinhaber: BEGO Bremer Goldschlägerei Wilh.-Herbst GmbH & Co KG, 28359 Bremen (DE)
(72) Erfinder: Dolabdjian, Haig, Dr., 28876 Oyten (DE); Strietzel, Roland, Dr., 28865 Lilienthal (DE)
(74) Vertreter: Eisenführ Speiser

(56) Entgegenhaltungen:
- EP-A- 0 348 061
- EP-A1- 0 311 214
- DE-A1- 3 532 331
- DE-A1- 19 651 909
- DE-C1- 19 649 865
- FR-A- 2 754 704
- JP-A- H05 329 174
- US-A- 4 673 355
- US-A- 5 639 402
- Das, S et al: "Producing Metal Parts with Selective Laser Sintering", Hot Isostatic Pressin, vol. 50, no. 12, 1989,
- Gebhardt, A. 'Rapid prototyping: Werkzeug schnelle Produktentwicklung', Hanser, 1996
- "Ausdruck aus www.zahnimplantate.com/implantate", ,

## Beschreibung

Zahnersatz, wie Kronen, Brücken, Inlays, besteht regelmäßig aus komplexen Formkörpern, die meist einerseits die räumliche Konfiguration erhalten gebliebener Zahnteile (Zahnstümpfe), verloren gegangener ganzer Zähne oder Teile des Kiefers und andererseits die räumliche Situation gegenüber benachbarten und/oder antagonistischen Zähnen individuell berücksichtigen müssen. Nach dem Stand der Technik wird derartiger Zahnersatz in aufwendigen Verfahren hergestellt. Wohl am weitesten verbreitet ist die Fertigung der benötigten Formkörper - zumeist aus Edelmetall - oder Nichtedelmetall-Legierungen sowie Rein-Metallen - in einem mehrstufigen Abform- und Gießverfahren. Bekannt geworden ist jedoch auch das datengesteuerte Fräsen solcher Formkörper aus dem vollen Material, was zwangsläufig erheblichen Abfall zur Folge hat, der aufwendig wiederaufgearbeitet werden muß bzw, hohe Kosten verursacht.

Aus FR 22 754 704 ist ein Verfahren zum Herstellen eines Zahnimplantats bekannt, bei dem ein Abdruck des Knochenhohlraums eines extrahierten Zahnes genommen wird, dieser Abdruck digital erfasst wird und hierauf folgend aus den digital erfassten Daten schichtweise ein Polymer mittels eines stereolithographischen Verfahrens ausgehärtet wird, das Zirkonoxidpartikel enthält. Der ausgehärtete Kunststoffrohling wird nachfolgend in einem Wärmebehandlungsverfahren ausgebrannt, so dass ein Keramikpartikelgerüst verbleibt und dieses in einem weiteren Wärmenachbehandlungsverfahren gesintert, um das Zahnwurzelimplantat auszuhärten. Das Verfahren weist den Nachteil auf, dass eine aufwendige Fertigungstechnik eingesetzt wird und zu dem ein vollständiger Ausbrand des Kunststoffmaterials nicht erzielbar ist. Die mit diesem Verfahren erzielbaren Produkte weisen eine Restporosität auf, die den Einsatz im hochbelastbaren Zahnaufbereich nicht zulassen, da die Festigkeit der porösen Keramik hierzu nicht ausreichend ist.

Aus US 4,863,538 ist ein selektives Lasersinterverfahren bekannt, bei dem ein Pulver, welches Plastik, Metall, Keramik oder Polymersubstanz umfasst, mit einem Laser ausgehärtet wird. Der Nachteil dieses Verfahrens ist, dass keine ausreichend dichten und somit hinreichend belastbaren Produkten herstellbar sind und zu dem für die Erzielung der im Zahnimplantatbereich erforderlichen engen Toleranzen und Festigkeiten umfangreiche mechanische Nachbearbeitungen und thermische Nachbehandlungen erforderlich sind.

Ziel der Erfindung ist es, einen anderen, vorteilhafteren Weg zur Herstellung derartiger Formkörper aufzuzeigen. Sie bedient sich dazu eines anderweitig, nämlich zur Herstellung von komplexen Werkzeugen oder Bauteilen unter der Bezeichnung "Rapid Prototyping" bekannt gewordenen Verfahrens, bei dem die Formkörper aus einem sinterfähigen Pulver schichtweise aufgebaut werden, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren. Durch die1 Energiezufuhr werden die jeweils betroffenen Pulverbestandteile oberflächig angeschmolzen und gehen miteinander eine feste Bindung ein. Aufgrund der engen Fokussierung des Laserstrahls lässt sich - bei hoher Dichte - die Energiezufuhr sehr genau konfigurieren und demgemäß durch die gespeicherten räumlichen Daten des gewünschten Formkörpers entsprechend steuern.

Die Erfindung sieht ferner vor, dass das Pulver aus einem biokompatiblen Werkstoff von unterschiedlicher Korngröße zwischen 0 und 50 µm besteht. Anders als bei der bisherigen Anwendung des Laser-Sinterverfahrens für technische Anwendungszwecke soll auf diese Weise sichergestellt werden, dass sich der für Dentalzwecke bestimmte Formkörper mit menschlichem Gewebe verträgt (vgl. *Hoffmann-Axthelm,* Lexikon der Zahnmedizin, 6./11. Aufl., S. 97 und *Reuling,* Biokompatibilität dentaler Legierungen). Der Korngrößenverlauf gewährleistet eine besonders dichte Sinterung mit dem Vorteil hoher Druckbelastbarkeit des Formkörpers und geringer Bildung von Hohlräumen, welche für die Entstehung von Bakterienkulturen anfällig wären; er legt ferner die Abmessung und Paßgenauigkeit der Restauration fest.

Es ist jedoch auch möglich, das präzise lokale Kompaktieren des pulverförmigen Ausgangsmaterials auf andere Weise vorzunehmen, sei es durch andersartige Energiezufuhr. Im Allgemeinen aber wird eine optisch fokussierbare elektromagnetische Strahlung anderen Maßnahmen - wie etwa einer im Vakuum vorzunehmenden Korpuskularstrahlung - für die Energie-Übertragung vorzuziehen sein.

Die Sinteroberfläche des erfindungsgemäß hergestellten Formkörpers eignet sich infolge ihrer gewissen Rauhigkeit besonders gut für das häufig gewünschte Verblenden mittels keramischer oder anderer Werkstoffe, wie dies beispielsweise bei Kronen oder Brücken der Fall ist. Ferner ist es infolge der unschwer möglichen Einflußnahme auf die - die Steuerung bewirkende - Datei möglich, Korrekturen der Konfiguration des Formkörpers vorzunehmen, die aus den unterschiedlichsten Gründen (gegenüber dem abgetasteten Ergebnis) wünschenswert erscheinen mögen.

Vorzugsweise besteht das Pulver aus einer Legierung bei im wesentlichen gleichen Anteilen der Legierungsbestandteile in jedem Pulverkorn. Dies stellt einen großen Vorteil gegenüber der herkömmlichen Fertigung von dentalen Formkörpern aus geschmolzenen Legierungen dar, weil keine Gefahr der Entmischung der Legierungsbestandteile in der Schmelze und/oder dem gegossenen Formkörper besteht. Überdies erfordert die Herstellung von Halbzeugen aus bestimmten Legierungen, die für dentale Zwecke besonders vorteilhaft einsetzbar sind, komplizierte und aufwendige Verfahrensmaßnahmen, wie etwa den Saugguß, während das Pulverisieren solcher Legierungen wesentlich unaufwendiger ist. Während aber eine aus solchem Pulver hergestellte Schmelze (zur anschließenden Herstellung von Guß-Formkörpern) wiederum der Gefahr der Entmischung und somit Inhomogenität unterliegt, behält ein erfindungsgemäß gesinterter Formkörper seine gleichmäßige Verteilung der Legierungsbestandteile bei.

Für den Einsatz beim erfindungsgemäßen Verfahren hat sich ein Metallpulver folgender Zusammensetzung bewährt, ohne dass das Verfahren hierauf beschränkt wäre:
Ni61, 4Cr22, 9MO8, 8Nb3, 9Fe2, 5MnO,4TiO,1

## Patentansprüche

1. Anwendung des Laser-Sinterverfahrens, bei dem aus einem sinterfähigen Pulver schichtweise Formkörper aufgebaut werden, indem sukzessive jede Schicht des Pulvers einer zum lokalen Sintern führenden Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren, zur Herstellung von Zahnersatz, nämlich Kronen, Brücken, Inlays, mit der Maßgabe,
- dass das Pulver aus einem biokompatiblen Werkstoff von unterschiedlicher Korngröße zwischen 0 und 50 µm besteht.

2. Verfahren nach Anspruch 1, **dadurch gekennzeichnet, dass** das Pulver aus einer Legierung bei im Wesentlichen gleichen Anteilen der Legierungsbestandteile in jedem Pulverkorn besteht.

3. Formkörper zur Verwendung als Zahnersatz, nämlich Kronen, Brücken, Inlays, **dadurch gekennzeichnet, dass** der Formkörper aus lasergesintertem Pulver aus einem biokompatiblen Werkstoff von unterschiedlicher Korngröße zwischen 0 und 50 µm besteht, wobei der Formkörper aus dem sinterfähigen Pulver schichtweise mittels eines Rapid-Prototyping-Verfahrens aufgebaut wird, indem sukzessive jede Schicht des Pulvers einer zum lokalen Sintern führende Energie eines Laserstrahls ausgesetzt wird, wobei die Führung des Laserstrahls über die jeweilige Pulverschicht der Steuerung durch Daten unterliegt, welche die Konfiguration des Formkörpers in dieser Schicht repräsentieren.

## Claims

1. The use of a laser sintering process, in which moulded bodies are constructed in layers from a sinterable powder in that successively each layer of the powder is exposed to the energy of a laser beam resulting in local sintering, the guidance of the laser beam over the respective powder layer being subject to control by data which represent the configuration of the moulded body in this layer to produce a dental prosthesis, namely crowns, bridges, inlays, with the proviso that the powder consists of a biocompatible material of varying particle size between 0 and 50 µm.

2. A process according to Claim 1, **characterised in that** the powder consists of an alloy with substantially similar contents of the alloy constituents in each powder particle.

3. A moulded body for use as a dental prosthesis, namely crowns, bridges, inlays, **characterised in that** the moulded body consists of laser-sintered powder of a biocompatible material of varying particle size between 0 and 50 µm, wherein the moulded body is constructed layerwise from the sinterable powder by way of a Rapid Prototyping method **in that** successively each layer of the powder is exposed to the energy of a laser beam resulting in local sintering, the guidance of the laser beam over the respective powder layer being subject to control by data which represent the configuration of the moulded body in this layer.

## Revendications

1. Application d'un procédé de frittage à laser, dans lequel des corps moulés sont construits couche par couche en une poudre susceptible de fritter, en ce que successivement chaque couche de la poudre est soumise à l'énergie d'un faisceau laser conduisant à un frittage local, sachant que la conduite du faisceau laser sur la couche de poudre respective est soumise à la commande par des données, lesquelles représentent la configuration du corps moulé dans cette couche, pour la fabrication de prothèses dentaires c'est que couronnes, bridges, inlays, avec la condition imposée que la poudre consiste en un matériau biocompatible de granulométrie différente, entre 0 et 50 µm.

2. Procédé selon la revendication 1, **caractérisé en ce que** la poudre consiste en un alliage avec sensiblement les mêmes proportions des composants de l'alliage dans chaque grain de la poudre.

3. Corps moulé pour une utilisation comme prothèse dentaire c'est que couronnes, bridges, inlays, **caractérisé en ce qu'**il consiste en une poudre en un matériau biocompatible de granulométrie différente, entre 0 et 50 µm, frittée au laser, le corps moulè sont construit couche par couche en la poudre susceptible de fritter par une methode prototypage rapide, dans laquelle successivement chaque couche de la poudre est soumise à l'énergie d'un faisceau laser conduisant à un frittage local, sachant que la conduite du faisceau laser sur la couche de poudre respective est soumise à la commande par des données, lesquelles représentent la configuration du corps moulé dans cette couche.
